# EUROPEAN PATENT SPECIFICATION

(11) **EP 0 417 182 B1**
(45) Date of publication and mention of the grant of the patent: **06.10.1993**
(21) Application number: 89906845.6
(22) Date of filing: 25.05.1989
(51) Int. Cl.: F16D 1/06

(54) **DEVICE AT EXPANDABLE MOUNTING MEANS**
ANORDNUNG FÜR AUSDEHNBARE MONTAGE
DISPOSITIF POUR ORGANES EXPANSIBLES DE MONTAGE

(30) Priority: 25.05.1988 SE 8801942
(43) Date of publication of application: 20.03.1991
(73) Proprietor: SVENSSON, Roger, S-597 00 Atvidaberg (SE)
(72) Inventor: SVENSSON, Roger, S-597 00 Atvidaberg (SE)
(74) Representative: Berglund, Erik Wilhelm
(86) International application number: SE8900296
(87) International publication number: WO8911598

(56) References cited:
- DE-C- 3 444 608
- FR-A- 1 393 490
- SE-A- 442 429
- SE-A- 442 661

## Description

This invention is related to a device at expandable fastenings of the kind that includes an axle being provided with a conical axle part and a conical expandable sleeve that in order to fill out and fasten the axle in a mounting hole is pushed up on the conical axle part by a nut threaded on a threaded part on the axle acting on a washer that in turn press against the expandable sleeve. A device of this kind is known from SE-A-442 429. By using expandable means a very rigid fastening is obtained that is unlikely to loosen. Sooner or later however the fastening means must be loosened in order to exchange the bearings carried by the axle. This is however not fully as simple as it sounds. To start with there is always the risk, with the embodiments existing today, that dirt enters into the fastening as well as water, and corrosion and pollution result in that the expandable element will stick so hard that it will become close to impossible to loosen and remove the axle. The result is often that violence is used, which in turn can make the renewed mounting impossible, difficult or expensive, due to damages on the axle itself or the fastening brackets.

In view of the above problems an object of the invention is to define an improved sealing for axles fastened with expandable elements and the like. An other object of the invention is to enable and faciliate nondestructive demounting, and both these objects are to be achieved with a minimum of parts.

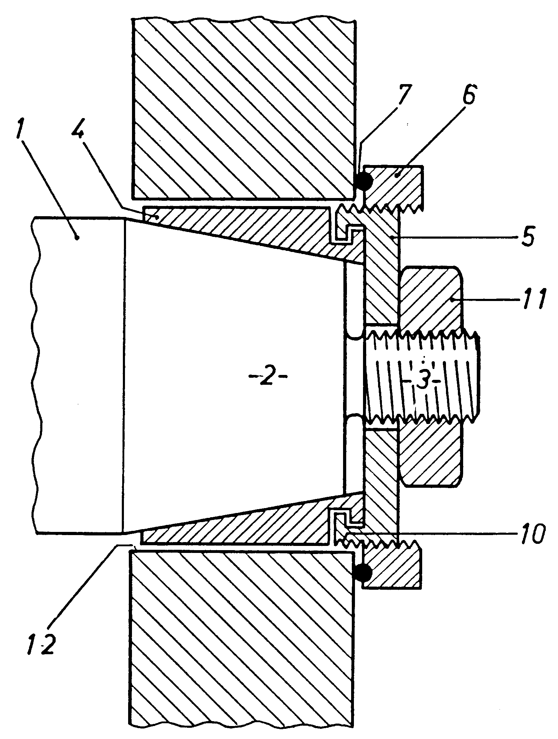

The above objects are achieved by the features of the characterising part of claim 1. Further advantages and features of the invention are readily apparent from the following description of a preferred embodiment, which in a longitudinal section is shown on the drawing.

In the drawing one end of an axle 1 is shown. The axle is mounted in two brackets of which only one is shown. On the axle a bearing is arranged. The resulting joint can be used to connect pivotable arms, pistons, piston rods etc.

The axle 1 has in its outer end a conically tapering part 2 and outside of this a threaded part 3. Between the axle 1 and the essentially cylindrical hole in the bracket is arranged a sleeve 4 with wedge-like longitudinal section. The tapering of the conical part 2 of the axle 1 and the sleeve 4 coincide, and the sleeve 4 is provided with slots extending from alternating ends of it so that the sleeve is easily expandable. In this way the sleeve 4 can be expanded by a forcing the sleeve 4 onto the conical part 2 of the axle so that the hole 12 is filled up and a secure fixing is obtained for the axle 1. In order to push the sleeve 4 against the conical part 2 of the axle a washer 5 is arranged to be pushed over the outer threaded part 3 of the axle and with an outer diameter less than the hole 12 for the fastening of a joint. The washer is pressed against the sleeve 4 by a nut 11 threaded on the threaded part 3.

The washer 5 has at its outer circumference a thread 10 on which after mounting a sealing and demounting ring is threaded. This is on its towards the bracket turned side provided with an O-ring 7. In this way it is certain that no dirt whatsoever can enter into the expanding parts. As a result hereof no pollution or corrosion takes place and the parts become easier to demount. Within the concept of the invention it is of course also possible to consider a sealing ring 6 constituted by a domed nut also protecting the nut and threaded part of the axle.

In order further to facilitate demounting of the expandable device the sleeve 4 and the washer 5 are connected gripping into each other with hooklike circumferencial protrusions. For the sleeve 4 these protrusions are turned inwards and for the washer 5 turned outwards. Preferably the cooperating surfaces are slightly inclined such that a pulling force exerted on the washer 5 tends to contract the expandable sleeve 4. In this way at demounting the nut 9 is first removed and then the sealing ring 6 is unscrewed and again treaded on the washer 5 with the seal turned outwards. The turning of the ring 6 then pulls the washer 5 outwards together with the expandable element 4. The ring 6 is preferably provided with an outer key grip.

Within the frame of the invention it is also possible to consider the nut and washer 5 integrated with each other, for which case the washer 5 is preferably turnable relative the sleeve 4. In case that the washer 5 does not have any key grip however it is preferably fixed in a turnable direction relative the sleeve so that the fastened sleeve holds the washer 5 against rotation when the ring 6 is turned in order to pull the sleeve outwards.

Instead of the above hooking of sleeve 4 and washer 5 it is of course also possible to consider bajonet grip.

The expandable fastening is in particular intended for the use in heavy machinery to connect piston rods and pistons pivotably with two opposed identical fastenings of the type described. By means of the invention the holes in the mounting brackets can be big enough to allow the axle 1 to be entered through the holes. Furthermore each end of the axle is mounted independently and the two fastening brackets will not be subjected to any contracting pressure against each ether. Since no pretension prevails the resistance against tension for the total device will be better than otherwise.

Between the two brackets the bearing of the pivotable parts will be arranged and the so to say inner side of the fastenings will be subjected to a constant presence of lubricants under pressure. In order to prevent this lubricant from seeping away from the fastening means to the outside sealing ring 6 and seal 7 cooperate to keep the lubricant where it should be, including the protection of the sleeve 4 and the surfaces of hole and axle.

When sealing the fastening it is of course not permitted to subject ring 6 to so great turning toques that the washer 5 is deformed and the sleeve 4 is subjected to removable pressures.

It is of course also possible to arrange a threaded hole in the axle 2 and use a bolt instead of a threaded part 3 and nut 11.

## Claims

1. Device at expandable fastenings of the kind that includes an axle (1) being provided with a conical axle part (2), and a conical expandable sleeve (4) that in order to fill out and fasten the axle in a mounting hole (12) is pushed up on the conical axle part (2) by a nut (11) threaded on a threaded part (3) on the axle (1) acting on a washer (5) that in turn press against the expandable sleeve (4), characterized in that the washer (5) on its outside is provided with a thread (10) for the threading of a nut part (6) or internally threaded ring thereon.

2. Device according to claim 1 characterized in that the nut part (6) is of the domed type.

3. Device according to claim 1 or 2 characterized in that the threaded washer (5) is connected to the exapandable sleeve (4).

4. Device according to claim 3, characterized in that the expandable sleeve (4) and the threaded washer (5) are connected by means of hooklike flanges allowing radial movement of the sleeve (4) so that the expansion of the sleeve (4) is not hindered.

5. Device according to claim 4, characterized in that the cooperating gripping surfaces of said hooklike flanges are slightly inclined such that at demounting a pulling force exerted on the washer (5) tends to contract the expandable sleeve (4).

6. Device according to claim 3-5, characterized in that washer (5) and the expandable sleeve 4) relative each other are freely rotatable.

7. Device according to claim 3 or 4 characterized in that washer (5) and sleeve (4) are locked relative each other against rotation.

8. Device according to any of the previous claims characterized in that the outer diameter of the washer (5) is less than the inner diameter of the mounting hole (12).

9. Device according to any of the previous claims, characterized in that the nut part (6) is provided with a seal (7) on its inner - towards the mounting hole (12) - turned end.

## Patentansprüche

1. Vorrichtung an aufweitbaren Befestigungen, die eine Achse (1) mit einem konischen Achsbolzen (Teil 2) und einer konischen, aufweitbaren Hülse (4) besitzen, welche zwecks Ausfüllen einer Montageöffnung (12) und Befestigen in dieser Öffnung durch eine Mutter (11) auf einem Gewindeteil (3) der Achse (1), die auf eine Unterlegscheibe (5) wirkt, die wiederum gegen die aufweitbare Hülse (4) drückt, auf den konischen Achsbolzen (2) getrieben wird, dadurch gekennzeichnet, dass die Unterlegscheibe (5) an ihrer Aussenseite mit einem Gewinde (10) zum Aufschrauben einer Mutter (6) oder eines Ringes mit Innengewinde versehen ist.

2. Vorrichtung nach Anspruch 1, dadurch gekennzeichnet, dass die Mutter (6) eine gewölbte Mutter ist.

3. Vorrichtung nach Anspruch 1 oder 2, dadurch gekennzeichnet, dass die mit Gewinde versehene Unterlegscheibe (5) mit der aufweitbaren Hülse (4) verbunden ist.

4. Vorrichtung nach Anspruch 3, dadurch gekennzeichnet, dass die aufweitbare Hülse und die Gewinde-Unterlegscheibe (5) mittels hakenförmigen Flanschen, die eine Radialbewegung der Hülse (4) erlauben, derart miteinander verbunden sind, dass die Aufweitung der Hülse (4) nicht behindert wird.

5. Vorrichtung nach Anspruch 4, dadurch gekennzeichnet, dass die zusammenwirkenden Greifflächen der genannten hakenförmigen Flanschen leicht geneigt sind, derart, dass bei der Demontage eine Zugkraft, die auf die Unterlegscheibe ausgeübt wird, ein Zusammenziehen der aufweitbaren Hülse bewirkt.

6. Vorrichtung nach den Ansprüchen 3 bis 5, dadurch gekennzeichnet, dass die Unterlegscheibe (5) und die aufweitbare Hülse (4) frei gegeneinander drehbar sind.

7. Vorrichtung nach den Ansprüchen 3 oder 4, dadurch gekennzeichnet, dass die Unterlegscheibe (5) und die aufweitbare Hülse (4) gegen eine gegenseitige Verdrehung blockiert sind.

8. Vorrichtung nach einem der vorstehenden Ansprüche, dadurch gekennzeichnet, dass der Aussendurchmesser der Unterlegscheibe (5) kleiner als der Innendurchmesser der Montageöffnung (12) ist.

9. Vorrichtung nach einem der vorstehenden Ansprüche, dadurch gekennzeichnet, dass die Mutter (6) auf ihrem inneren, gegen die Montageöffnung (12) gerichteten Ende mit einer Dichtung (7) versehen ist.

## Revendications

1. Dispositif sur fixations expansibles du genre qui comprend un axe (1) pourvu d'une cheville conique (élément 2) et une douille conique expansible (4) qui, afin de remplir une ouverture de fixation (12) et de fixer l'axe dans cette ouverture, est poussée sur la cheville conique (2) au moyen d'un écrou (11) qui est vissé sur une partie filetée (3) de l'axe (1) et qui agit sur une rondelle (5) qui, lui, appuie sur la douille expansible (4), caractérisé en ce que la rondelle (5) est pourvue, sur son côté extérieur, d'un filetage (10) pour le vissage d'un écrou (6) ou d'un anneau taraudé.

2. Dispositif selon la revendication 1, caractérisé en ce que l'écrou (6) est du type arqué.

3. Dispositif selon la revendication 1 ou 2, caractérisé en ce que la rondelle filetée (5) est reliée à la douille expansible (4).

4. Dispositif selon la revendication 3, caractérisé en ce que la douille expansible (4) et la rondelle filetée (5) sont reliées au moyen de flanges en forme de crochet permettant un mouvement radial de la douille (4) de façon à ne pas entraver l'expansion de la douille (4).

5. Dispositif selon la revendication 4, caractérisé en ce que les surfaces de prise coopérantes des dites flanges en forme de crochet sont légèrement inclinées pour qu'une force de traction exercée sur la rondelle (5) lors du démontage tende à contracter la douille expansible (4).

6. Dispositif selon les revendications 3 à 5, caractérisé en ce que la rondelle (5) et la douille expansible (4) peuvent librement tourner l'une par rapport à l'autre.

7. Dispositif selon la revendication 3 ou 4, caractérisé en ce que la rondelle (5) et la douille (4) sont verrouillées contre une rotation l une par rapport à l'autre.

8. Dispositif selon l'une quelconque des revendications précédentes, caractérisé en ce que le diamètre extérieur de la rondelle est plus petit que le diamètre intérieur de l'ouverture de fixation (12).

9. Dispositif selon l'une quelconque des revendications précédentes, caractérisé en ce que l'écrou (6) est équipé d'un joint (7) sur son extrémité intérieur dirigé vers l'ouverture de montage (12).
